# EUROPÄISCHE PATENTSCHRIFT

(11) **EP 0 289 740 B1**
(45) Veröffentlichungstag und Bekanntmachung des Hinweises auf die Patenterteilung: **11.05.1994**
(21) Anmeldenummer: 88103751.9
(22) Anmeldetag: 10.03.1988
(51) Int. Cl.: B01D 61/00

(54) **Abstandselement zur Führung von Strömungsmedien**
Fluid flow spacing element
Elément d'espacement pour la conduction de fluides

(30) Priorität: 07.05.1987 DE 3715183
(43) Veröffentlichungstag der Anmeldung: 09.11.1988
(73) Patentinhaber: DT MEMBRANFILTER VERTRIEBS GMBH, D-21107 Hamburg (DE)
(72) Erfinder: Mohn, Jürgen, D-2057 Reinbek (DE); Heine, Wilhelm, D-2100 Hamburg 90 (DE)
(74) Vertreter: Schöning, Hans-Werner, Dipl.-Ing.

(56) Entgegenhaltungen:
- EP-A- 0 132 546
- WO-A-81/01371
- CH-A- 577 334
- DD-A- 138 864
- DE-A- 1 953 417
- US-A- 3 398 833
- US-A- 3 398 834

## Beschreibung

Die Erfindung betrifft ein Abstandselement zur Führung von Strömungsmedien, insbesondere bei Vorrichtungen zum Filtern und Trennen der Strömungsmedien durch Umkehrosmose und Ultrafiltration, wobei jeweils zwischen zwei im wesentlichen scheibenförmig ausgebildeten, mit einem zentralen Loch versehenen Abstandselementen, die vom Strömungsmedium umflossen werden, ein Filterelement eingeschlossen ist, wobei das Abstandselement um das zentrale Loch herum mit einer Mehrzahl von zueinander beabstandeten Öffnungen versehen ist, durch die das Strömungsmedium hindurchtritt.

Ein Abstandselement dieser Art ist bekannt (CH-A-577 334). Bei der aus diesem Dokument bekannten Vorrichtung werden die dort verwendeten Filterelemente jeweils abwechselnd in einem Hohlraum für das Strömungsmittel angeordnet, der jeweils zwischen zwei Umlenkblechen gebildet wird. Diese Umlenkbleche weisen ein zentrales Loch auf, um das herum eine gesonderte Scheibe gelegt wird, die einen axialen Abstand zur benachbarten Umlenkscheibe definiert und die dazu dient, über eine im zentralen Loch der Umlenkscheibe angeordnete Gewindestange festgezogen zu werden. An ihrer radialen Außenkante berühren die ansonsten leicht biegsam ausgebildeten Umlenkbleche das Gehäuse der Vorrichtung. Aufgrund ihres Aufbaus und ihrer bestimmungsgemäßen Anordnung in der bekannten Vorrichtung handelt es sich bei den Scheiben im eigentlichen Sinne nicht um Abstandselemente, da sie selbst keinerlei Abstandsfunktion haben. Vielmehr wird der Abstand zwischen zwei benachbarten Umlenkscheiben durch die um jeweils um die Gewindestange herum angeordnete Distanzscheiben bestimmt, wobei zwischen diesen Distanzscheiben das Filterelement eingeklemmt ist. Die Umlenkbleche haben somit lediglich die Aufgabe, den Strom des Strömungsmediums durch die Vorrichtung hindurch mäanderförmig um die Filterelemente herumzuführen.

Der Nachteil der Anordnung der bekannten Umlenkbleche in der bekannten Vorrichtung liegt darin, daß zusätzliche Distanzscheiben zwischen zwei benachbarten Umlenkblechen vorgesehen werden müssen, was einerseits die Herstellung derartiger Vorrichtungen erheblich kompliziert und verteuert und andererseits ein gesondertes Gehäuse nötig ist, um überhaupt ein Umströmen des Strömungsmediums um die Filterelemente in einer Kammer bzw. in einem Hohlraum, gebildet aus Umlenkblechen und Gehäuse, zu gewährleisten. Ein weiterer Nachteil der bekannten Umlenkbleche besteht darin, daß dort lediglich Filterelemente verwendet werden können, die berührungslos freitragend in die Kammer bzw. den Hohlraum hineinragen können, d.h. die Filterelemente müssen in einem hohen Maße eigenstabil sein, um sie im Hohlraum zwischen zwei Umlenkblechen überhaupt stabil positionieren zu können.

Aus der DE-A-19 53 417 ist ein Abstandselement bekannt, von dessen Oberfläche Wülste wegstehen, die kreisringförmig in vollem Umfang die Scheibe umgeben. Mittels dieser Wülste soll bei entsprechend hoher axialer Kraft einer ausreichend Abdichtung gegen das Entweichen einer Flüssigkeit erzielt werden.

Aus der US-A-3 398 833 ist eine Trägerplatte bekannt, bei der die Filterelemente einseitig vom Strömungsmedium beaufschalgt bzw. angeströmt werden. Die auf dem dortigen Scheibenelement ausgebildeten Erhebungen wirken mit der äußeren Kante eines Nabenteils zusammen, um ein Membranelement geringfügig in axialer Richtung zu den benachbarten Zellen zu beabstanden und dabei einen kreisförmigen Raum zwischen benachbarten Zellen zu bilden.

Aus der WO-81/01371 ist ein Abstandshalter bekannt, der durch zwischen benachbarten Membrankissen vorgesehenen flächengleichen, beidseitig genoppten und mit Durchbrüchen versehenen, vorzugsweise aus Kunststoff bestehenden Folien gebildet wird, die keinerlei Eigenstabilität aufweisen und somit keine Trägerfunktion für das Filterelemet ausüben können.

Es ist Aufgabe der vorliegenden Erfindung ein Abstandselement zu schaffen, das ein gutes Umströmen des Abstandselementes selbst und eines auf dem Abstandselement liegenden Filterelements gestattet, so daß sich auch bei großen Filterelementenstapeln die Partialdruckdifferenzen des Strömungsmediums zwischen Zulauf und Ablauf in vertretbaren Grenzen halten und der Fluß des Strömungsmediums optimiert und das Filterelement differenzdruckstabil aufgenommen wird.

Gelöst wird die Aufgabe gemäß der Erfindung dadurch, daß das Filterelement nach Art eines Membrankissens ausgebildet ist, daß jeweils zwischen zwei voneinander beabstandeten Öffnungen ein von wenigstens einer Oberfläche des Abstandselements hervorstehender Steg angeordnet ist und daß auf wenigstens einer Oberfläche des Abstandselements sowie der Oberfläche der Stege eine Mehrzahl von Erhaben von den Oberflächen wegstehender Vorsprünge vorgesehen ist.

Der Vorteil des erfindungsgemäßen Abstandselements liegt im wesentlichen darin, daß Filterelemente nach Art eines Membrankissens, die an sich keine Eigenstabilität aufweisen, im Zusammenwirken mit dem Abstandselement verwendet werden können und daß durch die Abstandselement für einen ungehinderten Strömungsmediumfluß um das Filterelement gesorgt wird, wobei aber das unmittelbare Aufliegen des Filterelements auf der Oberfläche des Abstandselements verhindert wird. Die nicht eigenstabilen Filterelemente nach Art eines Membrankissens liegen somit lediglich auf den Spitzenflächen der Vorsprünge auf, wobei die Vorsprünge auf dem Abstandselement in beliebiger geeigneter Zahl und einem beliebig geeigneten Abstand, beispielsweise auf gedachten Teilringen bei kreisförmigen Abstandselementen, vorgesehen sein können. Die eigentliche Trägerfunktion für das nicht eigenstabile Membrankissen wird somit vom erfindungsgemäßen Abstandselement wahrgenommen.

Die Öffnungen, die beide Oberflächen des Abstandselements im Bereich des zentralen Loches miteinander verbinden, wirken faktisch als Siele an einer Stelle des Abstandselements, an dem das Strömungsmedium den gesamten Flächenbereich einer Oberfläche überstrichen bzw. umflossen hat.

Vorteilhafterweise sind die Öffnungen schlitzförmig ausgebildet, wobei die Längsseiten der Schlitze, die länger als deren Querseiten sind, sich im wesentlichen radial vom Lochzentrum wegerstrecken. Dadurch wird bei optimaler Stabilität des Abstandselements im Bereich der Öffnungen eine optimierte Öffnung zum Durchtritt des Strömungsmediums geschaffen, wobei vorteilhafterweise die Öffnungen dabei eine trapezförmige Querschnittsform aufweisen.

Um im Bereich des Eintritts des Strömungsmediums in die Öffnungen Wirbel im Strömungsmedium, die zwangsläufig eine Vergrößerung der Partialdruckdifferenzen in diesem Bereich zur Folge haben würden, zu vermindern, weist das Abstandselement gemäß einer vorteilhaften Ausgestaltung eine im in radialer Richtung unmittelbar an die Öffnung angrenzenden Bereich in Richtung auf das Loch sich verjüngende Dicke auf. Das Strömungsmedium kann somit rampenartig in die Öffnung hinein und aus dieser auf der anderen Oberfläche heraus rampenartig wieder hochfließen.

Damit das aus den in der Regel mittig angeordneten Permeataustrittslöchern zwischen den Membranfolien stirnartig heraustretende Permeat ungehindert gesammelt und einem Permeataustritt zugeführt werden kann, ist das Loch des Abstandselements vorteilhafterweise in seinem Randbereich mit einer Mehrzahl von Permeatabflußlöchern, die schlitzartig ausgebildet sein können, versehen, die in eine um das Lochzentrum in einem vorbestimmten Abstand herum angeordnete Permeatabflußrinne für das aus dem Filterelement stirnseitig heraustretende Permeat hineinragen. Vorzugsweise ist dabei die Permeatabflußrinne durch einen an der Oberfläche des Abstandselements ausgebildeten und von ihr wegstehenden Ansatz begrenzt.

Grundsätzlich kann die Dichtung zwischen dem Abstandselement und dem Filterelement im Bereich des stirnseitigen Permeataustritts des Filterelements auf beliebige Art gestaltet sein. Es ist jedoch besonders vorteilhaft, daß um das zentrale Loch des Abstandselements herum an beiden Oberflächen eine umlaufende nutartige Vertiefung zur Aufnahme von Dichtungsringen ausgebildet ist, wobei der radiale Abstand der Vertiefungen zum Lochzentrum größer als der radiale Abstand zwischen dem Zentrum und dem Innenrand eines zentralen Loches des Filterelementes ist. In die nutartigen Vertiefungen lassen sich beispielsweise als Dichtelemente O-Ringe einsetzen, wobei die Vertiefungen so ausgebildet sind, daß die O-Ringe in ihnen im Haftsitz sitzen.

Die Vorsprünge selbst können zu einer Ebene parallel zur Oberfläche einen im wesentlichen kreisförmigen Querschnitt oder auch einen im wesentlichen tropfenförmigen Querschnitt aufweisen, wobei der tropfenförmige Querschnitt weitgehend eine Wirbelbildung beim an ihm entlang strömenden Strömungsmedium verhindert und einen Druckverlust reduziert.

Aus jeweils einem Abstandselement und einem Filterelement wird eine Filtereinheit gebildet, wobei eine beliebige Menge von Filtereinheiten einen Filterelementenstapel bildet. Um derartige Filtereinheiten zu einem Filterelementenstapel beliebiger Größe präzise und ohne weitere konstruktive Maßnahmen zusammenstellen zu können, weist das Abstandselement gemäß einer anderen vorteilhaften Ausführungsform in einem Bereich unmittelbar um das zentrale Loch herum auf der einen Oberfläche eine Mehrzahl erhaben von dieser wegstehender stiftartiger Vorsprünge und auf der anderen Oberfläche eine Mehrzahl von Vertiefungen auf, wobei jeweils ein Vorsprung und eine Vertiefung in bezug auf eine durch sie hindurchgehende gedachte gemeinsame zentrale Achse einen gleichen Abstand zum Lochzentrum haben.

Der stiftartige Vorsprung eines Abstandselements kann somit in die Vertiefung eines benachbarten Abstandselements usw. hineingesteckt werden, so daß ein absolut gleichmäßig ausgerichteter Filterelementenstapel ohne jede Mühe zusammengestellt werden kann, wobei vorzugsweise dabei die Vorsprünge und die Vertiefungen eine gleiche Querschnittsform aufweisen.

Das Abstandselement selbst weist im Bereich seines äußeren Umfangs einen äußeren umlaufenden Rand an beiden Oberflächen auf, wobei einer der Ränder wenigstens um die Dicke eines Filterelements in bezug auf die Flächennormale der Oberfläche höher ist als der andere, so daß in diese durch den etwas höheren Rand gebildete Vertiefung ein Filterelement (Membrankissen) eingelegt werden kann. Das Filterelement liegt dabei mit seinen äußeren Membranfolien vorzugsweise auf den Vorsprüngen auf, kommt also nicht in unmittelbaren Kontakt mit den Oberflächen.

Das Abstandselement selbst kann beispielsweise aus jedem beliebigen geeigneten Werkstoff bestehen, der dem Abstandselement bei geringem Gewicht eine hohe Festigkeit gibt.

Vorteilhafterweise besteht das Abstandselement aus Kunststoff, vorzugsweise ABS wobei ABS in einem Bereich, wo eine hohe Qualität des Permeats, beispielsweise Trinkwasserqualität oder auch Reinstwasserqualität gefordert wird, besonders geeignet ist.

Die Erfindung wird nun unter Bezugnahme auf die nachfolgenden schematischen Zeichnungen anhand eines Ausführungsbeispieles beschrieben. Darin zeigen:
- Fig. 1: im Schnitt eine Vorrichtung zum Filtern und Trennen eines Strömungsmediums, in der eine Mehrzahl von Abstandselementen und Filterelementen einen Filterelementenstapel bilden,
- Fig. 2: einen Schnitt des Abstandselements entlang der Linie A-B von Fig. 6,
- Fig. 3: einen Ausschnitt aus der Darstellung von Fig. 2 im Schnitt im vergrößerten Maßstab,
- Fig. 4: einen Ausschnitt des Randbereichs des Abstandselements im Bereich seines zentralen Loches in nochmals vergrößertem Maßstab in der Draufsicht,
- Fig. 5: einen Schnitt durch einen Steg in der Darstellung der Fig. 4,
- Fig. 6: eine Ansicht auf das Abstandselement von oben - Seite B -,
- Fig. 7: eine Ansicht auf das in Fig. 6 dargestellte Abstandselement von unten - Seite A -,
- Fig. 8a und 8b: eine Ausführungsform eines Vorsprungs im Schnitt und in der Draufsicht und
- Fig. 9a und 9b: einen Schnitt durch eine andere Ausführungsform des Vorsprungs und eine Draufsicht auf ihn.

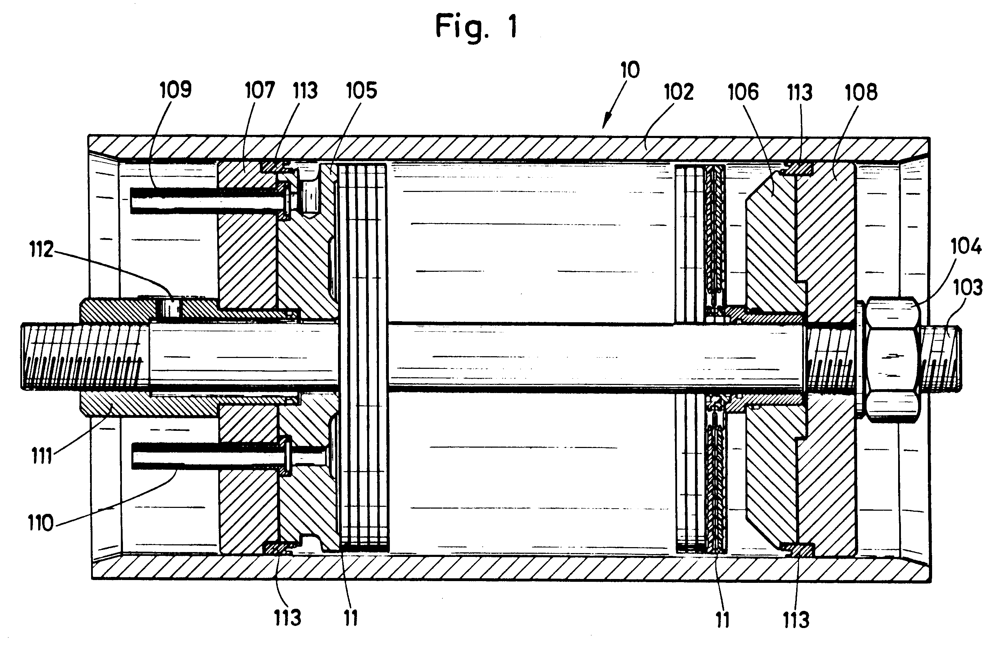

Eine Vorrichtung zum Filtern und Trennen von Strömungmedien durch Umkehrosmose und Ultrafiltration ist beispielsweise in Fig. 1 dargestellt, wobei in dieser Vorrichtung 10 eine Mehrzahl von Filterelementen 13 und Abstandselementen 11 zusammengestapelt einen Filterelementenstapel vorbestimmter Länge bilden.

Die Vorrichtung 10 wird zum besseren Verständnis des Aufbaus des Abstandselements 11 im Zusammenwirken mit einem Filterelement 13 in Form eines Membrankissen kurz erläutert. Die Vorrichtung 10 weist im wesentlichen ein rohrförmiges Gehäuse 102 auf. In das Gehäuse 102 sind abwechselnd Abstandselemente 11 und Filterelemente 13 eingesetzt, d. h. zwischen jedem Abstandselement 11 liegt ein Filterelement 13. Lediglich an beiden Enden des so gebildeten Filterelementenstapels weist das Abstandselement 11 kein Filterelement 13 auf. Am anschlußseitigen Ende des Filterelementenstapels ist eine Anschlußscheibe 105 vorgesehen, am entgegengesetzten Ende des Filterelementenstapels eine Endscheibe 106. Auf die Anschlußscheibe 105 ist ein äußerer Anschlußendflansch 107 aufgesetzt, während auf der Endscheibe 106 ein äußerer Endflansch 108 aufgesetzt ist. Der Filterelementenstapel und die übrigen vorgenannten Elemente werden durch einen zentralen Spannbolzen 103 zusammengehalten, der durch entsprechende zentrale Löcher dieser Elemente hindurchgeht, wobei beiderseits Muttern 104 und 111 auf entsprechenden beidseitigen Gewindeansätzen des zentralen Spannbolzens 103 die Einheit im Inneren des Gehäuses 102 zusammenhalten. Durch den Anschlußendflansch 107 und die Enscheibe gehen ein Zulauf 109 für die Zufuhr von Strömungsmedium 15 und ein Ablauf für das austretende Strömungsmedium 15 hindurch.

Ein durch den Zulauf 109 eintretendes Strömungsmedium 15 tritt in den Innenraum des Gehäuses 112 ein und zwar in den Spalt zwischen dem Filterelementenstapel und der Innenwandung des Gehäuses 102. Das Strömungsmedium gelangt in diesem Spalt in den Raum, der zwischen der Endscheibe 106 und dem daran angrenzenden Abstandselement gebildet wird. Das Strömungsmedium tritt durch die Öffnungen 14 im Abstandselement ein und fließt längs der inneren Oberfläche 119 des Abstandselements 11, wird von dort im Bereich des Randes 34 um ein zwischen dem Abstandselement und dem benachbarten Abstandselement eingelegtes Filterelement 13 umgelenkt und läuft wieder zurück in Richtung des Zentrums, um erneut durch die Öffnung 14 des zweiten Abstandselements 11 hindurchzufließen. Von dort an wiederholt sich die Umlenkung des Strömungsmittelflusses in gleicher Weise bei den angrenzenden Abstandselementen 11 des gesamten Filterelementenstapels. Aus den zum zentralen Permeatabflußloch bzw. zur Permeatabflußrinne gerichteten Stirnseiten des Filterelementes (Membrankissen) tritt das Permeat aus und gelangt längs geeigneter Fließkanäle, was im einzelnen noch weiter unten beschrieben wird, längs dem zentralen Spannbolzen 103 fließend, aus dem Permeatablauf zur weiteren Verarbeitung nach draußen. Das konzentrierte Strömungsmedium 15 gelangt, nachdem es den gesamten Filterelementenstapel quasi mäanderförmig durchlaufen hat, in einen ringförmigen Sammelbereich, der in der Anschlußscheibe 105 ausgebildet ist und von dort über den Ablauf 110 nach draußen. Der gesamte Filterelementenstapel wird über geeignete Dichtungen 113 im Inneren des Gehäuses 102 gehalten.

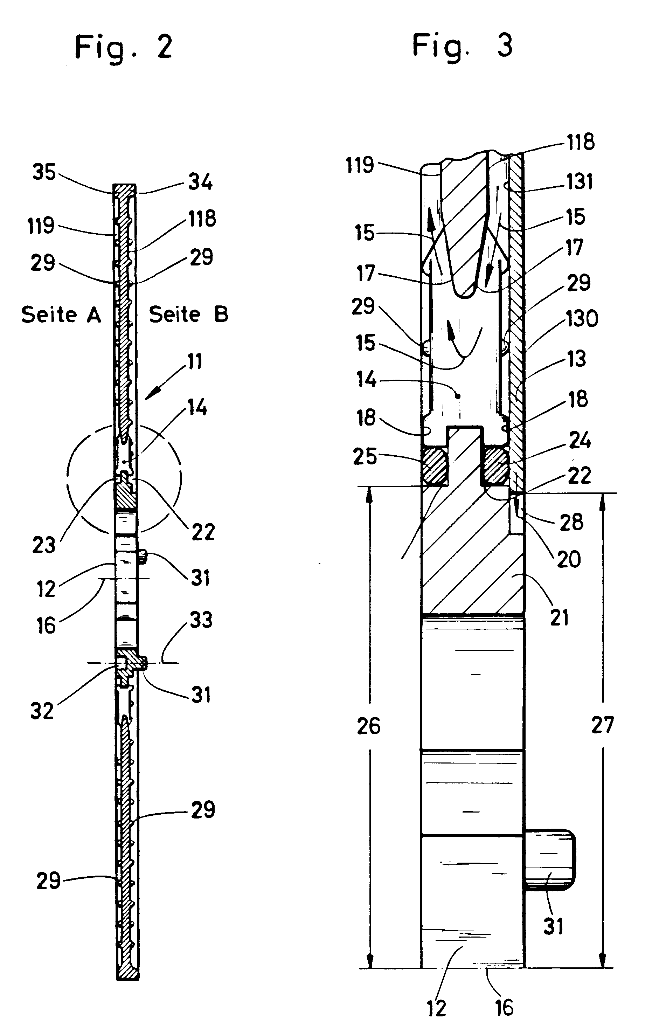

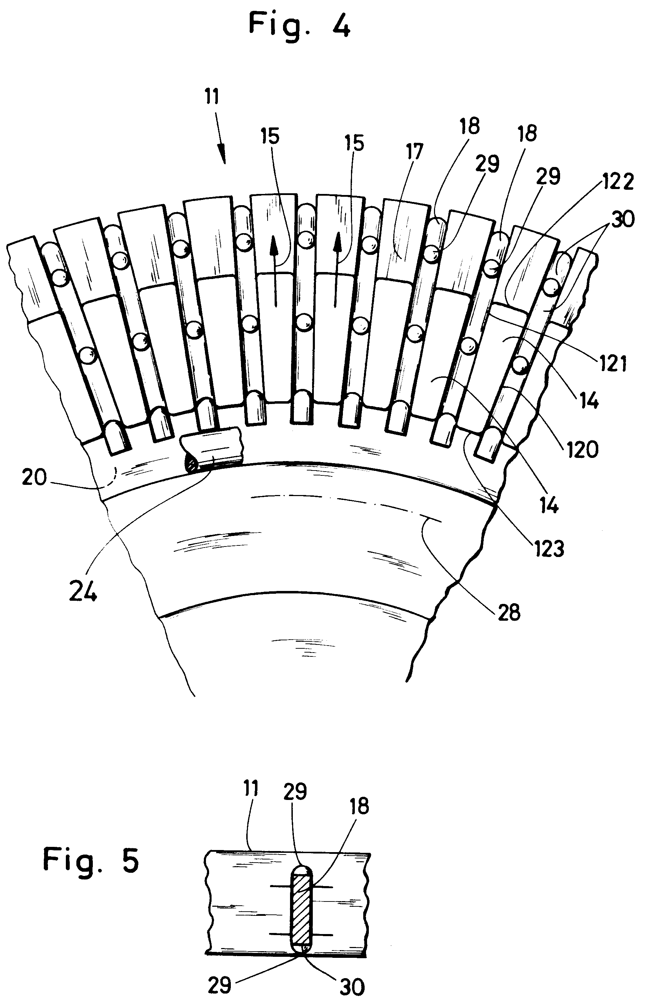

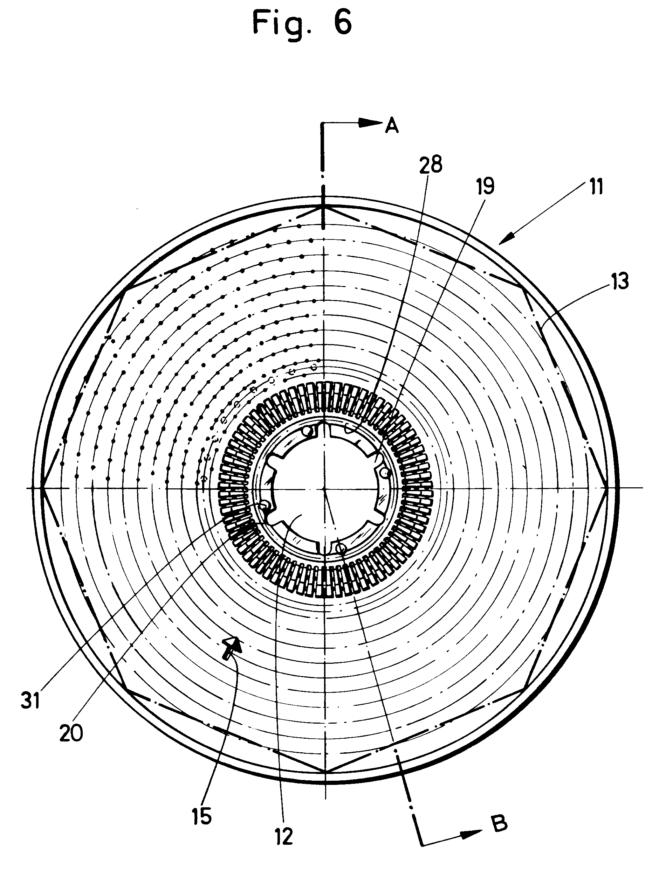

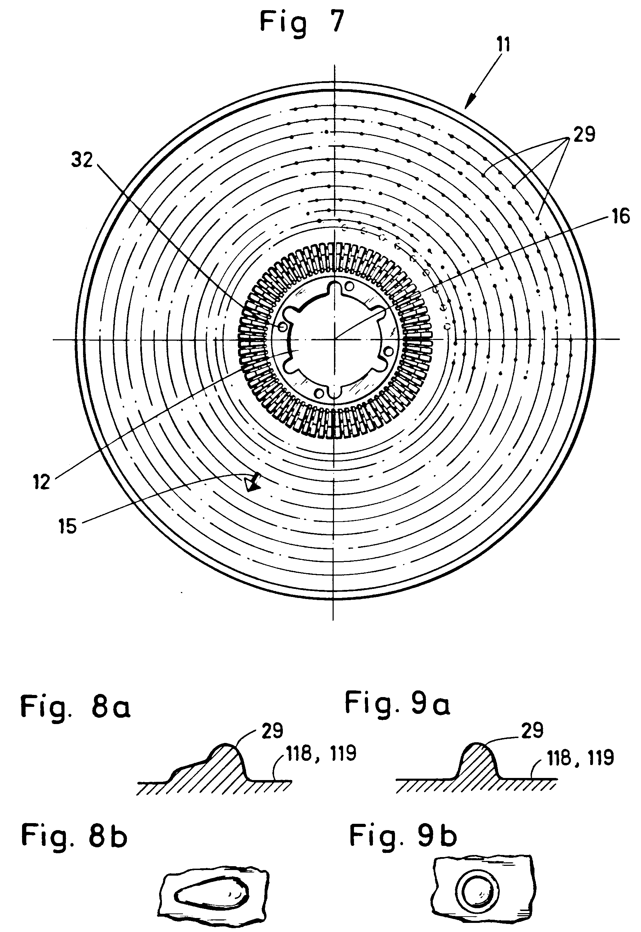

In Fig. 2 ist ein Abstandselement 11 im Schnitt dargestellt, wie es im vorbeschriebenen Filterelementenstapel verwendet wird. Das Abstandselement 11 weist bei dem hier beschriebenen Ausführungsbeispiel einen kreisförmigen Querschnitt auf und ist von zwei scheibenförmigen Oberflächen 118, 119 begrenzt. Eine Achse, die hier durch das Lochzentrum 16 symbolisiert wird, ist die Achse eines zentralen Loches 12. Um das zentrale Loch 12 herum weist das Abstandselement 11 eine Mehrzahl von zueinander beabstandeten Öffnungen 14 auf, durch die das Strömungsmedium 15 hindurchtritt, vgl. Fig. 3 und 4, was im einzelnen noch weiter unten beschrieben wird. Bei der hier beschriebenen Ausführungsform sind die Öffnungen 14 auf einem bestimmten gedachten Kreis liegend im wesentlichen in gleichem Abstand zum Lochzentrum 16 um dieses herum angeordnet, vgl. Fig. 6 und 7.

Die Öffnung 14 sind schlitzförmig ausgebildet, und sind im Querschnitt trapezförmig ausgebildet. Die Längsseiten 120, 121 der schlitzförmigen Öffnungen sind länger als die Querseiten 122, 123. In einem in radialer Richtung unmittelbar an die Öffnung 14 angrenzenden Bereich und vom Loch 12 wegweisend, verjüngt sich die Dicke des Abstandselements in Richtung auf das zentrale Loch zu, was durch die Bezugsziffer 17 symbolisiert wird. Die unmittelbare Spitze der Verjüngung kann im Querschnitt eine halbkreisförmige Form aufweisen.

Zwischen den voneinander beabstandeten Öffnungen 14 befindet sich jeweils ein Steg, der im wesentlichen von den Oberflächen 118, 119 orthogonal hervorsteht.

Wie aus Fig. 6 hervorgeht, ist das zentrale Loch 12 in seinem Randbereich mit einer Mehrzahl von Abflußlöchern versehen. Diese Permeatabflußlöcher 19 ragen in eine um das Lochzentrum 16 in einem vorbestimmten Abstand herum angeordnete Permeatabflußrinne 20 hinein, vgl. Fig. 3 und 6. Die Permeatabflußrinne 20 wird dabei durch einen Ansatz 21 begrenzt, der Teil des Abstandselements 11 selbst ist. Der Ansatz 21 ist an der einen Oberfläche 118 wegstehend von dieser ausgebildet.

Um das zentrale Loch 12 herum ist an beiden Oberflächen 118, 119 eine umlaufende nutartige Vertiefung 22, 23 angeordnet. Diese dient zur Aufnahme von Dichtungsringen 24, 25, die beispielsweise O-Ringe sein können. Diese Dichtungen 24, 25 sind in Fig. 3 im Haftsitz in den nutartigen Vertiefungen 22, 23 eingesetzt dargestellt. Der radiale Abstand 26 der Vertiefungen 22, 23 vom Lochzentrum 16 ist größer als der radiale Abstand zwischen dem Zentrum und dem Innenrand eines zentralen Permeatabflußloches 28 des in Form eines Membrankissens ausgebildeten Filterelements 13.

Das Filterelement 13 in Form eines Membrankissens, das in bezug auf seine äußere Form hier im einzelnen nicht gesondert dargestellt ist, weist eine beliebige kreisförmige oder vieleckige äußere Randbegrenzung auf. Das Filterelement 13 ist auf alle Fälle eine Scheibe und hat eine solche äußere Kontur, daß es auf die eine Oberfläche 118 des Abstandselements 11 gelegt werden kann, ohne den Bereich zu einem Rand, der das Abstandselement 11 außen begrenzt, dichtend abzuschließen. Dadurch kann, wie schon erwähnt, das Strömungsmedium 15 nach dem Längsströmen an dem Filterelement 13 umgelenkt werden und unter dem Filterelement 13 an der Oberfläche 118 längsströmend in die Öffnungen 14 zum Durchtritt durch das Abstandselement 11 zu gelangen.

Symbolisch ist ein Filterelement 13 in Fig. 6 durch die strichpunktiert dargestellte Linie gezeigt.

Das Filterelement 13 liegt mit seinem zentralen Loch axial zum Lochzentrum 16 des Abstandselements 11, vgl. Fig. 7 und 3.

Auf beiden Oberflächen 118, 119 sind eine Mehrzahl erhaben von diesen wegstehenden Vorsprüngen 29 angeordnet, was aus den Fig. 6 und 7 zumindest in einem Quadranten durch die auf den Kreislinien liegenden Punkte symbolisch dargestellt ist. Die Vorsprünge 29 können unterschiedlich ausgebildet sein, vgl. Fig. 8 und 9. Bei der Darstellung gemäß den Fig. 8a, 8b weisen diese in einer Ebene parallel zu den Oberflächen 118, 119 einen im wesentlichen tropfenförmigen Querschnitt auf, der gemäß Fig. 8a auch in seinem Querschnitt orthogonal zu den Oberflächen, Fig. 8a, einen Absatz aufweisen kann. Der Vorsprung gemäß den Fig. 9a, 9b weist einen in der Ebene parallel zu den Oberflächen 118, 119 im wesentlichen kugel- oder auch kreisförmigen Querschnitt auf. Es ist denkbar, daß entweder die eine oder die andere Form der Vorsprünge 29 auf einem Abstandselement 11 Verwendung findet, es ist aber auch denkbar, daß sowohl die eine als auch die andere Form der Vorsprünge 29 auf einem Abstandselement 11 vorgesehen werden kann.

Gemäß den Darstellung von Fig. 6 und 7 sind die Vorsprünge 29 auf konzentrischen Kreisen um das Lochzentrum 16 herum angeordnet. Es ist aber auch denkbar, diese in beliebiger anderer geeigneter Weise auf den Oberflächen 118, 119 anzuordnen.

Auch auf den im wesentlichen parallel zu den Oberflächen 118, 119 ausgebildeten Oberflächen der Stege 30 können erhaben von dieser Oberfläche wegstehende Vorsprünge 29, vgl. insbesondere Fig. 3, vorgesehen sein. Die Vorsprünge auf den Oberflächen der Stege sind jedoch nur so hoch, daß sie bezogen auf die Oberflächen 118, 119 des Abstandselements 11 genauso hoch sind wie die Vorsprünge 29 auf den Oberflächen 118, 119. Auf diese Weise wird sichergestellt, daß das Filterelement 13 auf den Vorsprüngen 29 abgestützt im wesentlichen plan zu den Oberflächen 118, 119 des Abstandselements aufliegt und somit auch die Dichtungsringe 24, 25 bei genügend großer Vorspannung des Systems dichtend unter geringfügiger Verformung des Querschnitts der Dichtungen 24, 25, vgl. Fig. 3 berührt.

Um den Bereich um das zentrale Loch 12 herum ist auf einer der Außenflächen 118 eine Mehrzahl erhaben von dieser wegstehender stiftartiger Vorsprünge 31 vorgesehen. Auf der anderen Oberfläche 119 ist ebenfalls eine Mehrzahl von Vertiefungen 32 vorgesehen, wobei jeweils die Vorsprünge 31 eines Abstandselements und eine Vertiefung 32 in bezug auf eine durch sie hindurchgehende gedachte gemeinsame zentrale Achse 33 einen gleichen Abstand vom Lochzentrum 16 haben. Die Vorsprünge 31 und die Vertiefungen 32 des Abstandselements weisen in der Regel eine gleiche Querschnittsform auf, wobei bei dem hier dargestellten Ausführungsbeispiel der Querschnitt kreisförmig ist. Durch die stiftartigen Vorsprünge 31 und die Vertiefungen 32 jeweils auf einer Oberfläche bzw. Seite des Abstandselements 11 können beliebig große Filterelementenstapel zusammengestellt werden, die hochgenau zueinander ausgerichtet sind.

Jedes Abstandselement 11 weist einen äußeren umlaufenden Rand 34, 35 zu beiden Oberflächen 118, 119 auf, wobei einer der Ränder 34 wenigstens um die Dicke eines Filterelements in bezug auf die Flächennormale der Oberfläche 118 höher ist, was sich deutlich aus den Fig. 2 und 3 ergibt. In diesen so gebildeten scheibenförmigen Hohlraum wird, wie zuvor schon erwähnt, das Filterelement 13 eingelegt, wobei die eine Oberfläche 130 des Filterelements, die gemäß Fig. 3 die äußere ist, im wesentlichen plan mit dem Ansatz 21 zu liegen kommt. Mehrere Abstandselemente 11, wenn sie gemäß der Darstellung von Fig. 1 zu einem Filterelementenstapel zusammengefügt sind, schließen jeweils zwischen sich ein Filterelement 13 ein, wobei die eine Oberfläche 131 des Filterelements auf den Vorsprüngen 29 der einen Oberfläche 118 des Abstandselements 11 aufliegt, während es mit seiner anderen Oberfläche 130 auf den Vorsprüngen 29 der anderen Oberfläche des benachbarten Abstandselements 11 aufliegt, usw..

Wie Anfangs schon dargestellt, fließt das Strömungsmedium 15 mäanderförmig einmal auf der Oberfläche 118 in Richtung auf die Öffnungen 14 zu, vgl. Fig. 6, wird dort umgelenkt und fließt auf der Oberfläche 119, vgl. Fig. 7 von den Öffnungen 14 weg - Seite A -, um im Bereich der äußeren geschlossenen Begrenzungskanten des Filterelements (Membrankissen) durch die zwischen dem Rand 34 des einen Abstandselements und dem Rand 35 des anderen Abstandselements umgelenkt zu werden und zurück zu fließen in Richtung der Öffnungen 14 - Seite B - des benachbarten Abstandselements 11.

Durch die Membranfolien des Filterelements 13 wird das Strömungsmedium 15 gefiltert oder permeiert und es entsteht im Raum zwischen den beiden Oberflächen 130, 131 das Permeat, das entsprechend dem Pfeil, vgl. Fig. 3, stirnseitig aus dem Filterelement 13 in die Permeatabflußrinne 20 austritt und von dort über die Permeatabflußlöcher 19, längs dem Spannbolzen 103 von Fig. 1 fließend, auf geeignete Weise gesammelt aus dem Permeatablauf 112, 111 austritt.

Aufgrund der hohen Innendrücke im Bereich zwischen den Oberflächen des Filterelements und den Oberflächen des Abstandselements wird eine gute Dichtung der Dichtringe 24, 25 zwischen dem Filterelement 13 und dem zwischen dem Abstandselement und dem Filterelement jeweils gebildeten Innenraum geschaffen, so daß eine in allen Betriebszuständen sichere Trennung zwischen dem Strömungsmediumkreislauf und dem Permeatkreislauf sichergestellt wird.

Die Abstandselemente der hier beschriebenen Art lassen sich vorzugsweise kostengünstig und betriebssicher aus Kunststoff herstellen, wobei sich insbesondere Polystyrol als Kunststoff eignet. Es hat sich gezeigt, daß sich insbesondere Acrylnitril-Butadien-Styrol-Copolymere (ABS), Styrol-Acrylnitril-Copolymere (SAN), sowie Luran aufgrund seiner Zulässigkeit im Trinkwasserbereich besonders gut zur Bildung der Abstandselemente eignet. Es ist aber auch nicht ausgeschlossen, daß das Abstandselement aus metallischen Werkstoffen hergestellt wird oder aus Verbundwerkstoffen, beispielsweise aus einer Kombination von Metall und Kunststoff.

| Bezugszeichenliste | | | |
|---|---|---|---|
| 10 | Vorrichtung | 16 | Lochzentrum |
| 102 | rohrförmiges Gehäuse | 17 | Verjüngung |
| 103 | zentraler Spannbolzen | 18 | Steg |
| 104 | Mutter | 19 | Permeatabflußloch |
| 105 | Anschlußflansch | | |
| 106 | Endscheibe | 20 | Permeatabflußrinne |
| 107 | Anschlußendlfansch | | |
| 108 | Endflansch | 21 | Ansatz |
| 109 | Zulauf | 22 | Vertiefung |
| 110 | Ablauf | 23 | Vertiefung |
| 111 | Mutter | 24 | Dichtungsring |
| 112 | Permeatablauf | 25 | Dichtungsring |
| 113 | Dichtung | 26 | Abstand |
| 118 | Oberfläche | 27 | Abstand |
| 119 | Oberfläche | 28 | Loch |
| 12 | Loch | 29 | Vorsprung |
| 120 | Längsseite | 30 | Stegoberfläche |
| 121 | Längsseite | 31 | Vorsprung |
| 122 | Querseite | 32 | Vertiefung |
| 123 | Querseite | 33 | Achse |
| 13 | Filterelement | 34 | Rand |
| 130 | Oberfläche | 35 | Rand |
| 131 | Oberfläche | | |
| 14 | Öffnung | | |
| 15 | Strömungsmedium | | |

## Patentansprüche

1. Abstandselement zur Führung von Strömungsmedien, insbesondere bei Vorrichtungen zum Filtern und Trennen der Strömungsmedien durch Umkehrosmose und Ultrafiltration, wobei jeweils zwischen zwei im wesentlichen scheibenförmig ausgebildeten, mit einem zentralen Loch (12) versehenen Abstandselementen (11), die vom Strömungsmedium umflossen werden, ein Filterelement eingeschlossen ist, wobei das Abstandselement (11) um das zentrale Loch (12) herum mit einer Mehrzahl von zueinander beabstandeten Öffnungen (14) versehen ist, durch die das Strömungsmedium (15) hindurchtritt, dadurch gekennzeichnet, daß das Filterelement nach Art eines Membrankissens (13) ausgebildet ist, daß jeweils zwischen zwei voneinander beabstandeten Öffnungen (14) ein wenigstens von einer Oberfläche (118, 119) des Abstandselemts hervorstehender Steg (18) angeordnet ist und daß auf wenigstens einer Oberfläche (118, 119) des Abstandselemts (11) sowie der Oberfläche (30) der Stege (18) eine Mehrzahl von erhaben von den Oberflächen (118, 119, 30) wegstehender Vorsprünge (29) vorgesehen ist.

2. Abstandselement nach Anspruch 1, dadurch gekennzeichnet, daß die Öffnungen (14) schlitzförmig ausgebildet sind und die Längsseiten (120, 121) der Schlitze, die länger als deren Querseiten (122, 123) sind, sich im wesentlichen radial vom Lochzentrum (16) weg erstrecken.

3. Abstandselement nach Anspruch 2, dadurch gekennzeichnet, daß die Öffnungen (14) eine trapezförmige Querschnittsform haben.

4. Abstandselement nach einem oder beiden der Ansprüche 1 bis 3, dadurch gekennzeichnet, daß es eine im in radialer Richtung unmittelbar an die Öffnung (14) angrenzenden, vom Loch (12) wegweisenden Bereich in Richtung auf das Loch (12) sich verjüngende (17) Dicke aufweist.

5. Abstandselement nach einem oder mehreren der Ansprüche 1 bis 4, dadurch gekennzeichnet, daß das Loch (12) in seinem Randbereich mit einer Mehrzahl von Permeatabflußlöchern (19) versehen ist, die in eine um das Lochzentrum (16) in einem vorbestimmten Abstand herum angeordnete Permeatabflußrinne (20) für das aus dem Filterelement (13) stirnseitig heraustretende Permeat hineinragen.

6. Abstandselement nach Anspruch 5, dadurch gekennzeichnet, daß die Permeatabflußrinne (20) durch einen an der Oberfläche (118) des Abstandselements (10) ausgebildeten und von ihr wegstehenden Ansatz (21) begrenzt wird.

7. Abstandselement nach einem oder mehreren der Ansprüche 1 bis 6, dadurch gekennzeichnet, daß um das zentrale Loch (12) herum an beiden Oberflächen (118, 119) eine umlaufende nutartige Vertiefung (22, 23) zur Aufnahme von Dichtungsringen (24, 25) ausgebildet ist, wobei der radiale Abstand (26) der Vertiefungen (22, 23) zum Lochzentrum (16) größer als der radiale Abstand (27) zwischen dem Zentrum und dem Innenrand eines zentralen Loches (28) des Filterelements (13) ist.

8. Abstandselement nach einem oder mehreren der Ansprüche 1 bis 7, dadurch gekennzeichnet, daß die Vorsprünge (29) in einer Ebene parallel zu den Oberflächen (118, 119) einen im wesentlichen kreisförmigen Querschnitt aufweisen.

9. Abstandselement nach einem oder mehreren der Ansprüche 1 bis 8, dadurch gekennzeichnet, daß die Vorsprünge (29) in einer Ebene parallel zu den Oberflächen (118, 119) einen im wesentlichen tropfenförmigen Querschnitt aufweisen.

10. Abstandselement nach einem oder mehreren der Ansprüche 1 bis 9, dadurch gekennzeichnet, daß in einem Bereich unmittelbar um das zentrale Loch (12) herum auf der einen Oberfläche (118) eine Mehrzahl erhaben von dieser wegstehender stiftartiger Vorsprünge (31) und auf der anderen Oberfläche (119) eine Mehrzahl von Vertiefungen (32) vorgesehen ist, wobei jeweils ein Vorsprung (31) und eine Vertiefung (32) in bezug auf eine durch sie hindurchgehende gedachte gemeinsame zentrale Achse (33) einen gleichen Abstand vom Lochzentrum (16) haben.

11. Abstandselement nach Anspruch 10, dadurch gekennzeichnet, daß die Vorsprünge (31) und die Vertiefungen (32) eine gleiche Querschnittsform aufweisen.

12. Abstandselement nach einem oder mehreren der Ansprüche 1 bis 11, dadurch gekennzeichnet, daß dieses einen äußeren umlaufenden Rand (34, 35) an seinen beiden Oberflächen (118, 119) aufweist, wobei einer der Ränder (34) wenigstens um die Dicke eines Filterelements (13) in bezug auf die Flächennormale der Oberfläche (118) höher ist.

13. Abstandselement nach einem oder mehreren der Ansprüche 1 bis 12, dadurch gekennzeichnet, daß es aus Kunststoff besteht.

14. Abstandselement nach Anspruch 13, dadurch gekennzeichnet, daß der Kunststoff Polystyrol ist.

15. Abstandselement nach Anspruch 13, dadurch gekennzeichnet, daß der Kunststoff Acrylnitril-Butadien-Styrol-Copolymere (ABS) ist.

16. Abstandselement nach Anspruch 13, dadurch gekennzeichnet, daß der Kunststoff Styrol-Acrylnitril-Copolymere (SAN) ist.

17. Abstandselement nach Anspruch 16, dadurch gekennzeichnet, daß der Kunststoff Luran ist.

## Claims

1. A spacing element for guiding flowing media, particularly in the case of apparatuses for filtering and separating the flowing media by reversal osmosis and ultrafiltration, whereby a filter element is enclosed between two substantially disc-shaped spacing elements (11) which are provided with a central hole (12) and around which flowing medium passes, the spacing element (11) being provided around the central hole (12) with a plurality of apertures (14) spaced apart from one another and through which the flowing medium (15) passes, characterised in that the filter element is constructed in the manner of a diaphragm cushion (13) and in that between any two spaced-apart apertures (14) there is at least one web (18) projecting from a surface (118, 119) of the spacing element and in that on at least one surface (118, 119) of the spacing element (11) and on the surface (30) of the webs (18) there are a plurality of raised projections (29) protruding from the surfaces (118, 119, 30).

2. A spacing element according to Claim 1, characterised in that the apertures (14) are slit-shaped and the long sides (120, 121) of the slits which are longer than their transverse sides (122, 123) extend substantially radially away from the centre (16) of the hole.

3. A spacing element according to Claim 2, characterised in that the apertures (14) have a trapezoidal cross-section.

4. A spacing element according to one or both (sic!) of Claims 1 to 3, characterised in that in the region directed away from the hole (12) and directly adjacent the aperture (14) in a radial direction, the thickness of the spacing element diminishes (17) in the direction of the hole (12).

5. A spacing element according to one or more of Claims 1 to 4, characterised in that the marginal portion of the hole (12) is provided with a plurality of permeate drains (19) which project into a permeate drain gutter (20) disposed at a predetermined distance from and around the centre (16) of the hole to carry away the permeate emerging from the end of the filter element (13).

6. A spacing element according to Claim 5, characterised in that the permeate drain channel (20) is bounded by a projecting member (21) constructed on and standing away from the surface (118) of the spacing element (10).

7. A spacing element according to one or more of Claims 1 to 6, characterised in that around the central hole (12), on both surfaces (118, 119) there is an encircling groove-like depression (22, 23) adapted to receive sealing rings (24, 25), the radial spacing (26) between the depressions (22, 23) and the centre (16) of the hole being greater than the radial spacing (27) between the centre and the inner edge of a central hole (28) in the filter element (13).

8. A spacing element according to one or more of Claims 1 to 7, characterised in that in a plane parallel with the surfaces (118, 119), the projections (29) have a substantially circular cross-section.

9. A spacing element according to one or more of Claims 1 to 8, characterised in that in a plane parallel with the surfaces (118, 119) the projections have a substantially drop-shaped cross-section.

10. A spacing element according to one or more of Claims 1 to 9, characterised in that in the region immediately around the central hole (12), on one surface (118), there are a plurality of peg-like projections (31) standing proud of the said surface while on the other surface (119) there are a plurality of depressions (32), one projection (31) and one depression (32) being spaced at the same distance from the hole centre (16) in respect of an imaginary common central axis (33) passing through them.

11. A spacing element according to Claim 10, characterised in that the projections (31) and the depressions (32) have an identical cross-sectional shape.

12. A spacing element according to one or more of Claims 1 to 11, characterised in that it has an outer encircling rim (34, 35) on its two surfaces (118, 119), one of the rims (34) being higher by the thickness of a filter element (13) in respect of the surface normal of the surface (118).

13. A spacing element according to one or more of Claims 1 to 12, characterised in that it consists of a synthetic plastics material.

14. A spacing element according to Claim 13, characterised in that the synthetic plastics material is polystyrene.

15. A spacing element according to Claim 13, characterised in that the synthetic plastics material is acrylonitril butadene styrene copolymer (ABS).

16. A spacing element according to Claim 13, characterised in that the synthetic plastics material is styrene-acrylonitril-copolymer (SAN).

17. A spacing element according to Claim 16, characterised in that the synthetic plastics material is lurane.

## Revendications

1. Entretoise pour le guidage de fluides en écoulement, notamment dans des dispositifs servant à filtrer et séparer les fluides en écoulement par osmose inverse et ultrafiltration, dans lequel un élément de filtre est inséré respectivement entre deux entretoises (11) réalisées sensiblement en forme de disques et pourvues d'un trou central (12) et autour desquelles circule le fluide en écoulement, et dans lequel l'entretoise (11) comporte, autour du trou central (12), une multiplicité d'ouvertures (14) distantes les unes des autres, que traverse le fluide en écoulement (15), caractérisée en ce que l'élément de filtre est agencé à la manière d'un coussin à membrane (13), qu'une barrette (18), qui fait saillie au moins sur une surface supérieure (118, 119) de l'entretoise, est disposée respectivement entre deux ouvertures (14) distantes l'une de l'autre, et que sur au moins une surface (118, 119) de l'entretoise (11) ainsi que sur la surface (30) des barrettes (18) il est prévu une multiplicité d'appendices saillants surélevés (29), qui font saillie sur les surfaces (118, 119, 30).

2. Entretoise selon la revendication 1, caractérisée en ce que les ouvertures (14) sont réalisées sous la forme de fentes et que les côtés longitudinaux (120, 121) des fentes, qui sont plus longs que leurs côtés transversaux (122, 123), s'étendent sensiblement radialement à partir du centre (16) du trou.

3. Entretoise selon la revendication 2, caractérisée en ce que les ouvertures (14) possèdent une forme en coupe transversale trapézoïdale.

4. Entretoise selon une ou toutes les revendications 1 à 3, caractérisée en ce qu'elle possède une épaisseur qui diminue (17) en direction du trou (12), dans la zone qui jouxte directement l'ouverture (14) dans la direction radiale et s'étend à partir du trou (12).

5. Entretoise selon une ou plusieurs des revendications 1 à 4, caractérisée en ce que le trou (12) comporte, dans sa zone marginale, une multiplicité de trous (19) d'évacuation d'un perméat qui débouchent dans une gouttière (20) d'évacuation du perméat, qui est disposée autour du centre (16) du trou, à une distance prédéterminée et est prévue pour le perméat qui sort frontalement de l'élément de filtre (13).

6. Entretoise selon la revendication 5, caractérisée en ce que la gouttière (20) d'évacuation du perméat est limitée par un appendice saillant (21) qui est formé sur la surface (118) de l'entretoise (10) et fait saillie à partir de cette surface.

7. Entretoise selon une ou plusieurs des revendications 1 à 6, caractérisée en ce qu'un renfoncement circonférentiel en forme de gorge (22, 23) est formé autour du trou central (12), dans les deux surfaces (118, 119), pour recevoir des bagues d'étanchéité (24, 25), la distance radiale (26) entre les renfoncements (22, 23) et le centre (16) du trou étant supérieure à la distance radiale (27) entre le centre et le bord intérieur d'un trou central (28) de l'élément de filtre (13).

8. Entretoise selon une ou plusieurs des revendications 1 à 7, caractérisée en ce que les appendices saillants (29) possèdent, dans un plan parallèle aux surfaces (118,119), une section transversale sensiblement circulaire.

9. Entretoise selon une ou plusieurs des revendications 1 à 8, caractérisée en ce que les appendices saillants (29) possèdent, dans un plan parallèle aux surfaces (118, 119), une section transversale sensiblement en forme de goutte.

10. Entretoise selon une ou plusieurs des revendications 1 à 9, caractérisée en ce que dans une zone située directement autour du trou central (12) il est prévu, sur une surface (118), une multiplicité de parties saillantes surélevées en forme de tétons (31), qui sont en saillie sur cette surface, et sur l'autre surface (119), une multiplicité de renfoncements (32), respectivement une partie saillante (31) et un renfoncement (32) étant situés à une même distance du centre (16) du trou, par rapport à un axe central imaginaire (33) les traversant.

11. Entretoise selon la revendication 10, caractérisée en ce que les parties saillantes (31) et les renfoncements (32) possèdent une forme identique en coupe transversale.

12. Entretoise selon une ou plusieurs des revendications 1 à 11, caractérisée en ce que cette entretoise possède un bord circonférentiel extérieur (34, 35) au niveau de ses deux surfaces (118, 119), l'un des bords (34) étant plus élevé, au moins d'une hauteur égale à l'épaisseur d'un élément de filtre (13), par rapport à la normale à la surface (118).

13. Entretoise selon une ou plusieurs des revendications 1 à 12, caractérisée en ce qu'elle est réalisée en matière plastique.

14. Entretoise selon la revendication 13, caractérisée en ce que la matière plastique est du polystyrène.

15. Entretoise selon la revendication 13, caractérisée en ce que la matière plastique est formée de copolymères acrylonitrile-butadiène-styrène (ABS).

16. Entretoise selon la revendication 13, caractérisée en ce que la matière plastique est formée de copolymères styrène-acrylonitrile (SAN).

17. Entretoise selon la revendication 16, caractérisée en ce que la matière plastique est du Luran.
